# EUROPEAN PATENT APPLICATION

(11) **EP 2 360 612 A1**
(43) Date of publication of application: **24.08.2011**
(21) Application number: 10250169.9
(22) Date of filing: 02.02.2010
(51) Int. Cl.: G06F 21/00

(54) **Security system for disabling a software contaminant and related aspects**

(71) Applicant: British Telecommunications public limited company, London, Greater London EC1A 7AJ (GB)
(72) Inventor: The designation of the inventor has not yet been filed
(74) Representative: Brinck, Coreena Fiona Anne

(57) **Abstract**

A system and method are provided which enable malware or any other form of contaminant software which performs one or more operations on a communications-enabled device to be disabled and/or removed. The device has a first state in which it has a security application which is capable of establishing a connection to an addressable remote server. The one or more operations performed by said contaminant software cause said device to have a second state in which the addressable remote server accessible by the security application of said device in said first state at said given address is not accessible at said address by the device in the second state. The software contaminant is disabled and/or removed from the device (a client terminal) by providing the device with an address for a proxy server, the address of the proxy server being addressable by the security application running on the device in its second state. This enables the establishment of a communications channel between said device and said addressable remote server via said proxy server, said channel providing said application with data, and the security application then uses the additional data to enable the device to disable at least one of said operations performed by said software.

## Description

The present invention relates to a security system for disabling a software contaminant and to related aspects. In particular, but not exclusively the invention relates to a security system which enables a device infected with a software contaminant to obtain data enabled the device to at least disable one or more or all actions performed by the software contaminant, and preferably to effect the removal of the contaminant code from the device, and to related aspects.

A software contaminant comprises a computer program or suite of computer programs which contaminates software legitimately installed on a device having data storage and processing components. The actions a software contaminant takes are often hostile, intrusive and/or damaging to the user and/or device providing a platform for the contaminated software. Examples of computer contaminating software include computer viruses, worms, Trojan horses, root-kits comprising program(s) designed to hide or obscure the fact that a system has been compromised, privacy-invasive software such as spyware and dishonest adware, crime-ware, and other malicious and unwanted software and combinations thereof.

To prevent computers from being infected with such contaminating software, security software is usually installed on the computer. Security software generally comprises computer program(s) and/or one or more computer libraries (collections of sub-routines or classes which provide functional services to other programs) which help secure a computer system and/or computer network by preventing the installation of contaminating software on the computer system and/or computer network.

Security software which protects a communications-enabled device from being infected with software viruses and spyware and detects malware usually implements real time protection against the installation of malware software on the computer by scanning all incoming network data for malware software and blocking any threats which are recognised by the security software. Anti-malware software programs are used for detecting and removing malware software which has been already installed on to a computer. The anti-malware software scans the contents of the windows registry, operating system files, and other installed programs and generates a list which can be used to compare against known malware components removing files that match. Both real-time and off-line protection from malware requires the ability to recognise that the software component(s) installed comprise malware, for example, the recognition process might involve scanning a file to determine if a sub-set of the data which provides a "signature" for that malware is present.

Whenever a new form of malware is detected by security software developers, the means to recognise that software needs to be distributed to users of the security software so that the data set used by the security software's recognition process can be updated. Currently, updates are generally sourced from a subset of servers which are easily identified to allow simple updating from any location, for example: liveupdate.symantec.com, uk.mcafee.com, Windows Update etc.

To counter these known update mechanisms, malware will attempt to block access to security and update sites as part of its own protection mechanism to avoid detection and/or the removal of its method of propagation. Any changes to add new update sites can be excluded quickly by the malware authors once known. This impacts end users and support groups as customers are unable to download updates and new countermeasures to protect or remove multiple threats.

The present invention seeks to obviate and/or mitigate the above problems associated with the removal of malware which has already successfully contaminated a communications-enabled device having data storage and processing capabilities. The invention seeks to enable a security application to be installed on the device and/or a security application to be updated if already installed on the device even if the software contaminant has already reconfigured the device to block access to one or more known security software sites and security software update data sites.

### SUMMARY STATEMENTS OF THE INVENTION

A first aspect of the invention seeks to provide a system for automatically updating the address of a remote data-providing server to which a client terminal device is configured to request data from, the requested data being required to remove one or more software contaminants from said device, said one or more software contaminants having reconfigured the device to disrupt communications from the device which are addressed to a known data-providing server address from which said data is available to the device, the system comprising:
at least one said remote data-providing server, the data-providing server being arranged to provide a plurality of said devices with data which enables each said device to remove said one or more said software contaminants; and
a local address-update server arranged to provide an updated address of one or more of said at least one data-providing server to one or more said devices, each device being configured to generate a request for data to the data-providing server located at said updated address,
wherein each one of said at least one remote data-providing servers is configured to respond to a device which has generate a request for data by providing said data which, when received and processed by the device, enables the device to at least disable a said software contaminant.

One aspect of the invention seeks to provide a security system comprising:
at least one security server;
at least one communications-enable device comprising:
   a computer contaminant; and
   a security application running on said device;
at least one address server; and
at least one proxy server having a dynamically assigned address for said security server,
wherein, a said device has a first state in which said security application is capable of establishing a connection to a said security server at a first address to obtain additional data for performing one or more security actions,
one or more operations performed by said computer contaminant when running on said device cause said device to have a second state in which data obtainable from the security server accessible by said security application when said terminal is in said first state at said first address is not accessible at said first address by the device in the second state, and
said device is further arranged to broadcast a request for an address of a proxy server of said security system, said proxy server being arranged to establish a connection to a said security server;
wherein a said security server is arranged to provide additional data to a said security application running on a said device;
wherein a said address server is arranged to provide a said device with the address for a said proxy server in response to receiving said broadcast request;
wherein a said proxy server is arranged to communicate with a said device and with said security server to establish a communications channel between said device and said security server which restores the accessibility of said security server to said security application running on said device to enable said security server to provide said additional data to said security application running on said device.

One or more of said one or more operations performed by computer contaminant may be disabled by the one or more actions performed by said security application.

One or more of said actions may be additional to the set of one or more actions a said security application performs on a said device.

The additional data may repair said security application in said second state to a state where it is able to perform one or more actions it performed previously in said first state.

One aspect of the invention seeks to provide a method of disabling one or more operations performed by software running on a communications-enabled device, the device having a first state in which it is capable of establishing a connection to an addressable remote server, said one or more operations performed by said software causing said device to have a second state in which an addressable remote server accessible by an application of said device in said first state at an address is not accessible at said address by the device in the second state, the method comprising:
providing the device with an address for a proxy server, wherein the address of the proxy server is addressable by the application running on the device in its second state;
establishing a communications channel between said device and said addressable remote server via said proxy server, said channel providing said application with data;
said application using said data to enable the device to disable at least one of said operations performed by said software.

The software may comprises a computer contaminant.

The application may comprise a security application arranged to receive data from a remote security server. The software may comprise malware arranged in use on the device to prevent said security application from retrieving data from said remove server to update said security software.

The communications channel may establish by said security software as a communications channel between said device and said proxy server.

The broadcast by the device may be responsive to a denial of access to the remote server and/or to a proxy server via which said remote server was previously accessible. The denial of access may be caused by said computer contaminant.

The security application may disguise the request for said data from the remote server as a request for data from the proxy server. The proxy server may process the received request and generate a secondary request from the proxy server which is sent to the remote server. Alternatively, the proxy server may forward the received request by readdressing it to the remote server. The remote server responds to the received request by sending data to the proxy server. The proxy server responds to receiving a response from the remote server by forwarding this to the device.

Another embodiment of the invention comprises providing a method of removing a software contaminant comprising at a client terminal: generating an address request for a proxy server associated with another server arranged to provide data to disable and/or remove a software contaminant; broadcasting said address over a communications network for reception by one or more receiving address-providing server. At a receiving address-providing server the following is performed: processing said request; ascertaining a dynamically assigned address for the requested proxy server. The client terminal then performs: receiving a response including the dynamically assigned proxy server address; establishing a secure channel with the proxy server using said proxy server address; generating a request for data; and sending said request for data to said proxy server. The proxy server then performs: receiving said request for data; processing said received request to determine the address of the requesting client; establishing a secure channel with said other server; and forwarding said request using said secure communications channel to said other server. The other server then performs: receiving said request for data from the proxy server; receiving a dynamically assigned address for a server; generating a request for data to decontaminate the client terminal; sending the request to the dynamically assigned server address; receiving the data; processing the data; and performing a client terminal decontamination using the processed data.

In addition, one or more of the servers or client terminal may be configured to detect when a request for data enabling a software contaminant to be detected and/or disabled has been blocked. The client terminal may be arranged to retrieve and/or receive and/or generate one or more dynamically assigned addresses for said server for subsequent use by the security software program running on the terminal. Each said address may be selected in synchrony with the accessibility of the security server at that address.

A dynamically assigned address may be provided in a form associated with a time-stamp. If the time-stamp of a received address message exceeds a permitted time range, the broadcast request for a dynamically assigned address may be regenerated.

The broadcast request may contain information identifying the source of the broadcast and authentication information for the device and/or a user of the device.

The broadcast request may be automatically or manually generated.

The security application update data which is sent to and/or downloaded by the client in one embodiment repairs an existing program/parameter/data set already installed on the device or provide new and/or additional data and/or parameters and/or programs for installation on the device.

Aspects of the invention are as set out herein and in the accompanying independent claims and the preferred embodiments are as set out herein and in the accompanying dependent claims. The aspects and embodiments of the invention may be combined with each other in any suitable arrangement apparent to one of ordinary skill in the art,

Embodiments of the invention will now be described with reference to the accompanying drawings which are by way of example only and in which:
Figure 1 shows how the operation of a contaminated client terminal differs from the operation of an uncontaminated client terminal when requesting update data in a communications system;
Figure 2 shows an exemplary client terminal arranged to implement an embodiment of the invention;
Figure 3 shows a first embodiment of the invention in which the client terminal broadcasts an address update request;
Figure 4 shows an exemplary message flow for the first embodiment of the invention;
Figure 5 shows steps in a method of obtaining an updated server address according to an embodiment of the invention;
Figure 6 shows an embodiment of the invention in which address updates are broadcast to client terminals;
Figure 7 shows an exemplary message flow in an embodiment of the invention in which local proxy server address updates are broadcast to client terminals; and
Figure 8 shows an exemplary message flow in an embodiment of the invention in which a proxy server responds directly to a client terminal which has broadcast a request for a proxy server address update.

Embodiments of the invention including the best mode currently contemplated by the inventor are described herein below. Persons of ordinary skill in the art will be aware of equivalent functional features to those described in the embodiments herein which are exemplary only. The description of the invention and drawings may omit features whose presence and function in the context of the invention are already known in the art where the inclusion of such features would be apparent to one of ordinary skill in the art.

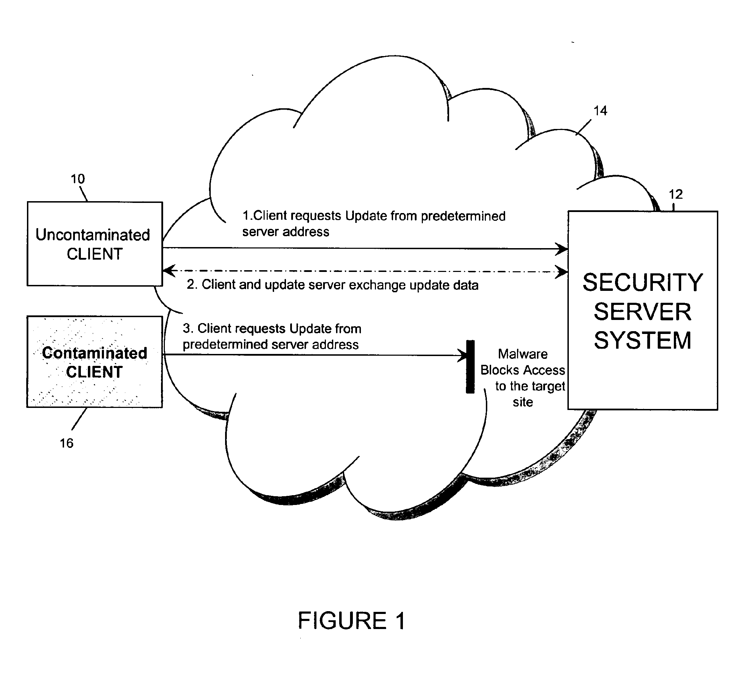

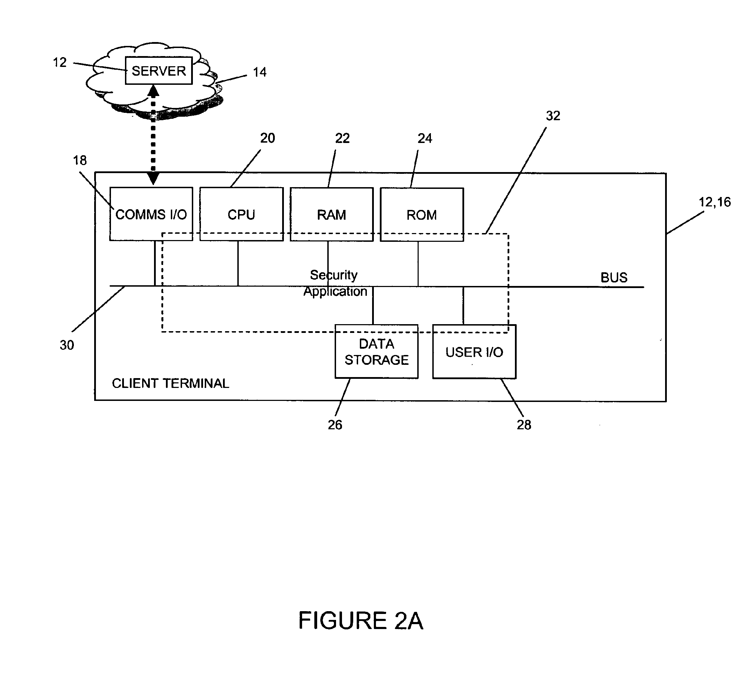

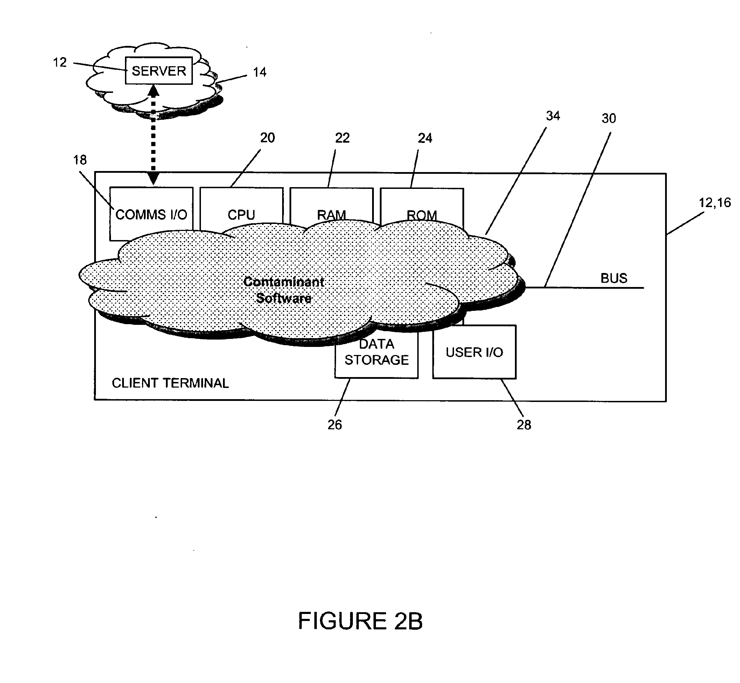

Figure 1 of the accompanying drawings shows how computer software comprising a security application 32 which is arranged to run on uncontaminated client terminal 10 is able to request data from a remote security server system 12 at a predetermined server address. The requested data provides additional information to the security application 32 (see Figure 2) which updates the information available to the security application to identify and/or disable programs which perform operations which a user of the client terminal might not wish to be performed and/or that the user is unaware are being performed. A contaminated client terminal 16 includes one or more software contaminants which prevent additional information from being provided to the security application 32. For example, as shown in Figure 1, a software contaminant on contaminated client terminal 16 comprises means to prevent its host device 16 from generating communications to security server system 12 at the predetermined server address as this is an address the software contaminant has knowledge of either statically and/or dynamically, for example either through its source program code or through its host's operational environment, for example, through the security software itself.

In an exemplary embodiment as shown in Figure 1, the security application 32 is configured to generate requests for additional data which are sent to an address of a server in the security server system 12. The security application 32 directs the request using a web-browsing protocol, to a universal resource location (url) address, either directly or through the client terminal's web-browsing application, for example, Mozilla™, Internet Explorer™ , Netscape™ and the like. In this example, the security application generates a request for additional information which is sent over a communications network 14 to a server located at a predetermined server address which is accessed by generating a communications message to the url: update.acme.com, which is translated into the address of a local server using a suitable domain name server (DNS) operation which enables the local proxy server to be discovered using HTTP. When the server (or proxy or mirror server) receives a message addressed to the update.acme.com it processes the message to extract the request data, to authenticate the client and validate the request, and responds with the requested update information if available to the client. Any suitable form of authentication may be used, for example, a private/public key pair which enables the client terminal to be provided with a public key which enables it to authenticate messages which have been encrypted with the corresponding private key as messages which have originated from the security server system 12.

At some point in time, however, the client terminal 12 receives computer code comprising or consisting of contaminant software which operates in a manner which a user of the client terminal will find difficult to detect, for example, it disrupts the operation of only some actions performed by the client terminal which would otherwise proceed differently. Amongst the actions which are impacted by the contaminant software are communications between the client terminal 12 and the security server system as the contaminant software is configured to prevent data from being sent to and/or received from one or more server addresses which have been associated with security services. Typically such a computer contaminant additionally affects the security of the client terminal by compromising data and/or performing actions which the user would not wish to be performed, and as such may be referred to as malware.

On example of a software contaminant comprises computer code which reconfigures one or more components on the device 16 so that if the security software application 32 requests an update from the update server 12, the request is not sent out to the security server system 12 over the communications network 14. For example, the client terminal may be reconfigured so that any communications addressed to update.acme.com is not sent out over an external interface of the device. Alternatively, or in addition, the software contaminant may reconfigure the client terminal to not accept communications sent from update.acme.com, the address of the remote security server. Alternatively, or in addition, the software contaminant blocks information from being provided to the security software 32 running on the client terminal 16 is to modify the authentication details provided by the client terminal 16 to the security server system 12 and/or by the security server system 12 to the security software 32 running on the client terminal 16. This prevents further communication between the security server system 12 and client terminal 16 as one or both of them will not trust that it is correctly communicating with the other. Alternatively, or additionally, the contaminant software may disguise the message failure so that a user is unaware that updates are not being provided. If the contaminant software is able to emulate the response from a server, it is possible to further compromise the security application 32.

If the security software application 32 running on the client terminal is able to receive additional data, this can enable it to identify the presence of a software contaminant (for example, by determining that certain actions are being performed by the client terminal which having a particular profile which is known to the security server system 12 as indicative of a software contaminant using the client terminal as its host). If the software contaminant prevents communication of such additional data from the security server system 12 to the security application 32 running on the client terminal 16, a software contaminant is able to maintain its presence on the client terminal 16 for longer as it is less likely to be detected by the security application 32 running on the client terminal.

Figure 2A of the accompanying drawings shows a security application 32 according to an embodiment of the invention which is hosted by an exemplary client terminal 12, 16. As shown in Figure 2A, a client terminal 12, 16 comprises components typical of a computer such as a communications interface 18 which is configured to enable data to be received from and sent over communications network 14. An exemplary communications interface 18 known in the art, for example, comprises a network interface card (NIC) via which the client terminal is able to connect with the security system server 12 using communications network 14. Other components provided on client terminal 12 which support the operation of the security software application 32 include a central processing unit 20 which processes data. Memory means 22, 24, 26 is provided for data storage, which may comprise random access memory 22, read only memory 24, or other data storage means 26, for example, hard-disk or flash memory. At least one form of memory is suitable for storing additional data received from the security server system. A suitable data input/ output interface may also be provided to enable user generated input (for example, via a keyboard or mouse or touch sensitive screen etc) and/or to provide output to a suitable display 34. Also shown schematically in Figure 2 is a common bus 36 connects the components of client terminal device 10, 16.

In some embodiments, the device 10, 16 does not have a conventional user interface and/or may not have any means to receive user input to the security application 32. For example, a device such as a television set-top box or games console which has internet connectivity may only be provided with means for a user to select programme information or perform certain gaming actions respectively. However, it is possible for such a device to still be contaminated with contaminant software and as such, a security application may be provided which implements the invention automatically to remove software contaminants without user input.

The security application 32 shown in Figure 2A is arranged to automatically receive additional information from a remote security server system 12 even when a software contaminant is operating on the client terminal 16 in a way which affects communications between the client terminal 16 and the remote server system 12.

Although in the embodiment shown in Figure 2A of the accompanying drawing client terminal 16 comprises a typical personal computer, for example, a desk-top or portable or laptop computer type device, those of ordinary skill in the art however will appreciate that the invention can enable any contaminated client terminal 16 to disable one or more actions which the contaminant software performs, and the term client terminal is thus intended to refer to any communications-enabled device capable of being impacted by such contaminant software such as, for example, a games console, a set-top box, a personal digital assistant type device, telephone type device, or a mobile telephone type device.

Figure 2B shows schematically an example of a contaminant software 34, which is capable of affecting the operation of one or more or all of the components shown in Figure 2A.

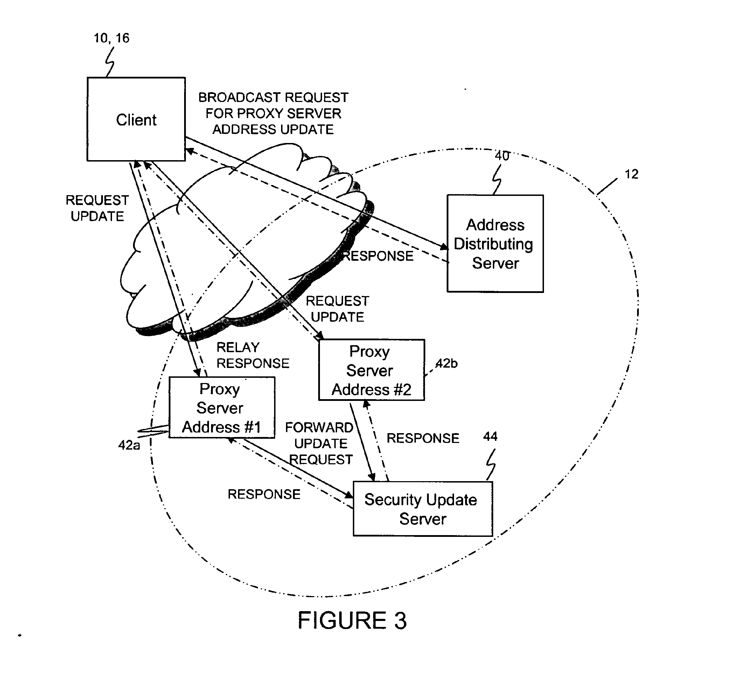

Figure 3 of the accompanying drawings shows an embodiment of the invention in which remote security server system 12 comprises an address distributing server 40, a security data update server 44 and at least one proxy server 42, although in this exemplary embodiment two proxy servers 42a,b are shown in Figure 3. In this embodiment, the address to which client terminals send their requests for additional data from the security data update server 44 in security server system 12 changes from time to time and the changes to the address of the data update server 44 are communicated to a plurality of client terminals by the address distributing server 40. The communications from the address distributing server 40 are arranged to automatically update the address to which each client terminal 10, 16 sends a request for a data update for its respective security application 32. The contaminant software 34 running on client terminal 16 is arranged to only disrupt communications between the client terminal 16 and one or more predetermined server addresses which are specified in source code or the first time the contaminant software 34 determines a relevant server address on its host device.

In the embodiment shown in Figure 3, the client terminal 16 receives a new address for a proxy server 42a,b for update server 44 and it is by sending requests to the proxy server address that enables the client terminal to receive additional information for its security application 32. The proxy address provided is assigned dynamically and so is not already known to the contaminant software 34. This enables the security application 32 running on the infected client terminal 16 to still be able to receive additional information if the contaminant software is not able to block the communications to and/or from the update server 44 and by installing this additional information the security application can determine if software contaminants which were undetectable prior to the update being provide are running on the client terminal 16. A detected software contaminant 34 can then be identified and/or disabled by the security application 32, and ideally the contaminant software 34 is then removed from the client terminal 16 (for example, by deleting the code comprising the contaminant software 34).

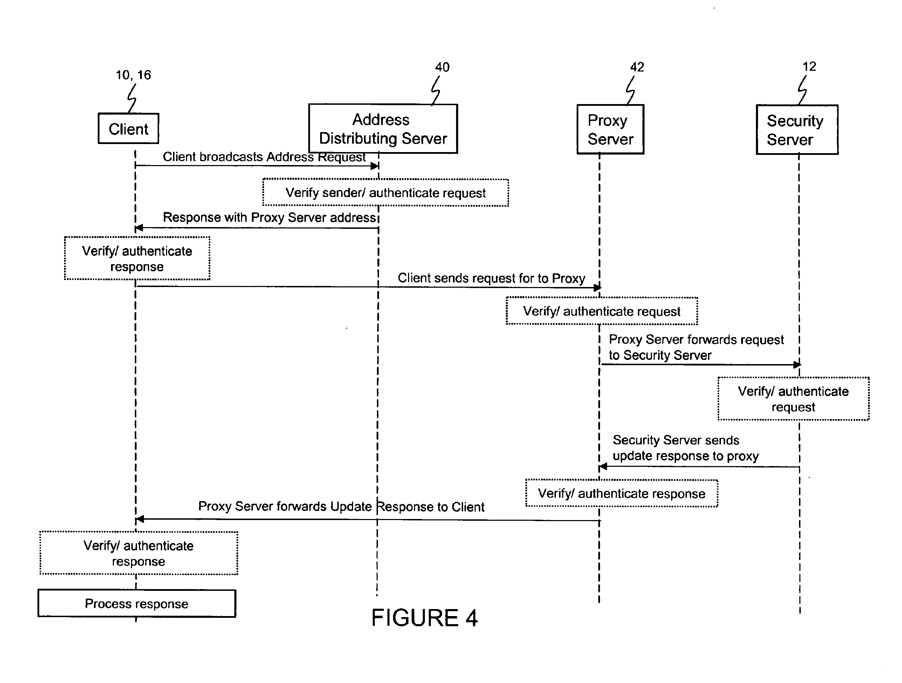

Figure 4 shows the flow of messages between the client terminal and the security server system 12 which provide a client terminal 16 with the ability to update its security application 32 with a new address for the update server 44 (as is shown in Figure 3). Firstly, the client terminal 16 broadcasting a request for an update to its update server address to address update server 40. The broadcast message advertises the device locally within a broadcast domain, using one or more suitable broadcasting method(s) known to those in the art. For example, a local DNS TXT name, subnet or local network broadcast or proprietary handshake can be used to request a server address and initiate a connection from the security application's update mechanism on the client terminal. Providing the software contaminant 34 is not configured to block broadcast requests, the broadcast enables the client terminal 16 to sent out a message over a communications network which several servers will receive,. To ensure that only the address distributing server is capable of understanding the message, however, the client terminal 16 is provided with an encryption key when installing security application 32 with which the contents of the broadcast message are encrypted.

When Address Distributing server 40 receives a broadcast communication, it decrypts the broadcast message using a corresponding decryption key to verify the sender and/or authenticate them. This enables the address distributing server 40 to determine the request is from a client terminal and from which client terminal the request was issued. Where the broadcast is deemed to be authentic the address distributing server 40 then responds with an encrypted message containing at least one proxy server 42a,42b address, which when received by the client terminal 16 is similarly appropriately validated and/or authenticated. The security application 32 running on the client terminal 16 is configured to scan all incoming messages, and so is able to determine from the message that this is a message for its update mechanism. Once the message has been decrypted appropriately, the information it contains can be processed by an update mechanism to extract a new proxy server address which dynamically changes the address of the server to which security application 32 sends out a request for additional security information. Where it the broadcast is deemed not to be authentic there shall be no response to avoid the contaminant identifying Proxy or Address Distributing Server addresses and blocking them.

The security application 32 then sends out a message containing a request for update information to one of the proxy server addresses provided (if more than one is provided the security application 32 either selects just one proxy server address from those provided or alternatively, it multicasts a request message to a plurality of proxy server addresses). Each proxy server 44a,44b receiving the request may then perform an appropriate authentication/validation process before forwarding the request to the update server 44.

Update server 44 will also process (and validate/authenticate) a received message before responding with appropriate update information which is then encapsulated in an appropriate message (and encrypted), and then forwarded to the client terminal via a proxy server 42a,42b. The proxy server 44a,44b then forwards the response to the client terminal 16 (optionally performing an authentication process on the forwarded message prior to forwarding it). As the contaminant software running on the client terminal only determines that the client terminal 16 has received software from an unknown address which is not associated with update server 44, it does not prevent the client terminal 16 from receiving the update message. The security application 32 then processes the message, decrypting it and/or validating and/or authenticating its source as appropriate, and then installs the update information.

The client terminal is already infected with a contaminant software which previously it was not able to detect using its security application 32. Now that the security application 32 has been provided with additional detection information through the above update mechanism, when the client terminal 16 next runs its security application 32, if the update includes information on how to determine the presence of the software contaminant 34 on the client terminal 16, the updated security application 34 will be able to determine the presence of the contaminant software 34 and disable it.

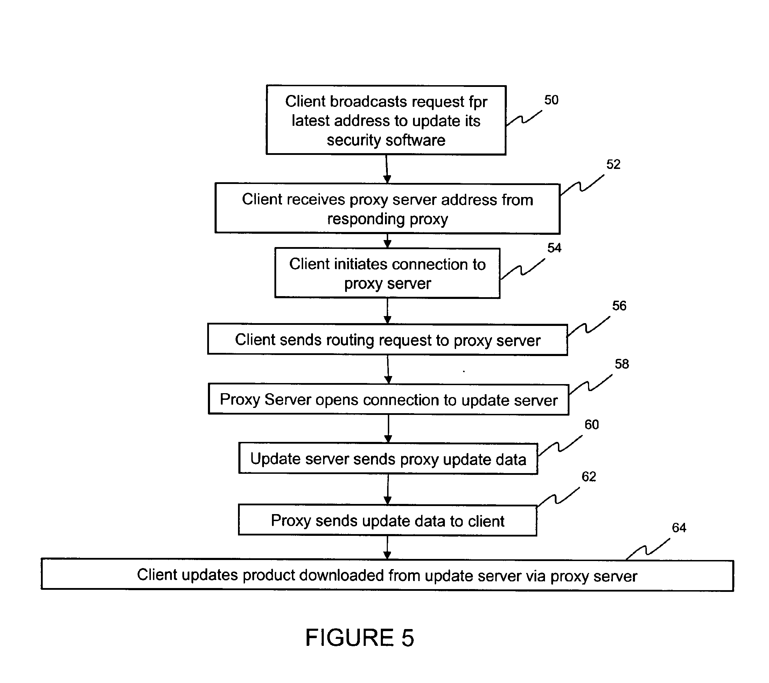

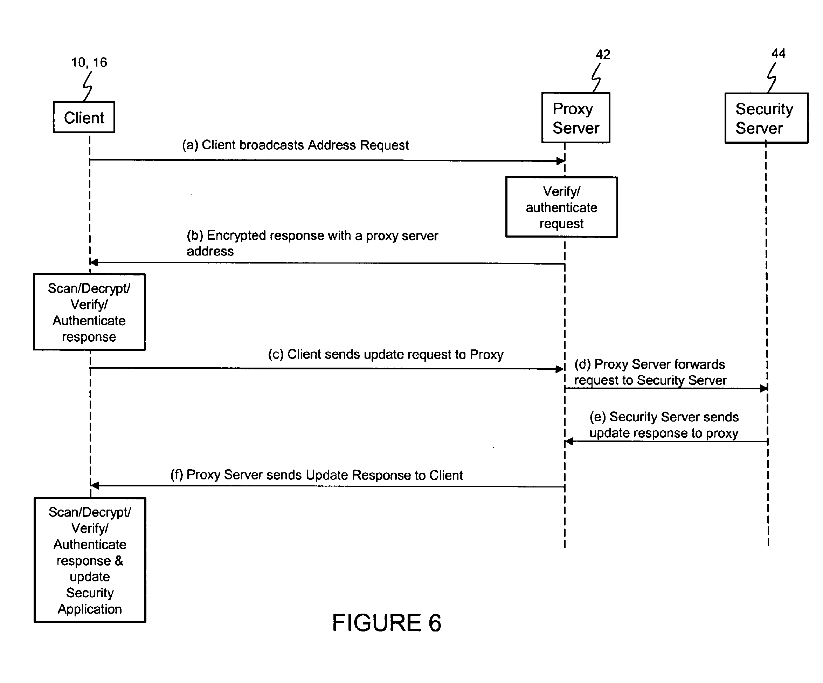

Figures 5 and 6 show an embodiment in which client terminal 16 generates a broadcast which is responded to directly by proxy servers 42a, 42b.

In Figure 5, steps in an embodiment of the invention comprising a method of removing malware are shown. The method comprises the client terminal 10, 16 broadcasting a request for an address for a server via which the client terminal 10,16 can obtain data to update its security software 32 (step 50). As shown in Figure 5, the method is suitable for a communications security service system which does not have a dedicated server 40 to distribute proxy server addresses to client terminals 10, 16 such as was shown in Figure 3. distributing server 40. A proxy server which receives this request authenticates the request and verifies it is genuine, and in response sends out its own address to the client terminal which generated the query. The client terminal 16 receives the proxy server address from the responding proxy server (step 52). The security application 32 is arranged to intercept incoming communications including the response, and when the response is received and scanned, code embedded in the response indicates that the information the response provides includes address update information for the client terminal 16. When the security application imports the new proxy server address information, the client terminal 16 is able to initiates a connection to the proxy server (step 54). The proxy server then sends out a request for an update which is routed via the proxy server (step 56). The proxy server 42a when it receives this request opens up a connection to the update server 44 (step 58) and forwards the request to the update server 44. The update server 44 receiving the request processes it, generates or retrieves from storage appropriate update information for the security application 32 running on that client terminal 16 and sends the update information to the proxy server 42a (step 60). The proxy server 42a then forwards the update information to the client terminal 16 (step 62). The security application 32 running on the client terminal 16 will then, when it scans this incoming communication, and after performing any necessary de-encryption and/or authentication and/or validation of the message, extract the relevant update information. The security application 32 is configured to then use the information which has been downloaded from the update server 44 via the proxy server 42a (step 64) to update itself.

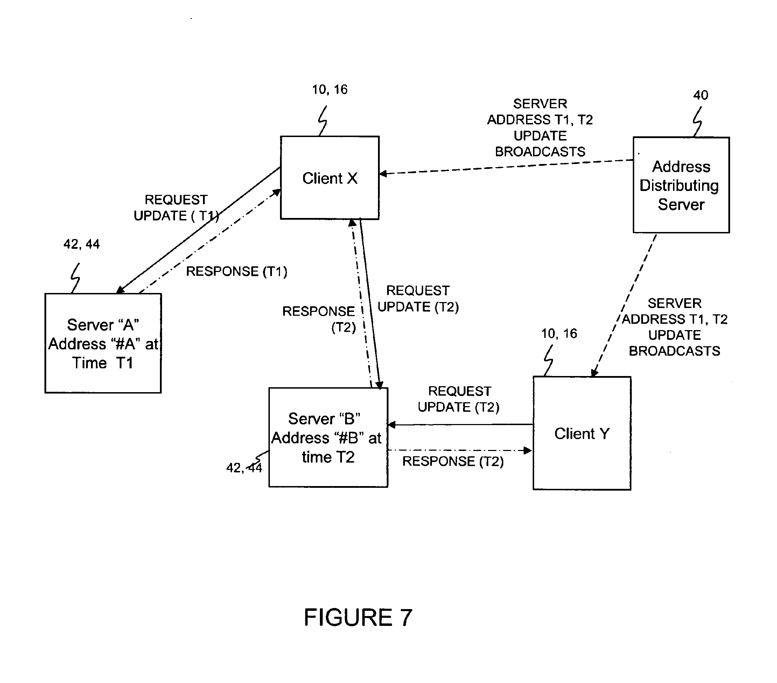

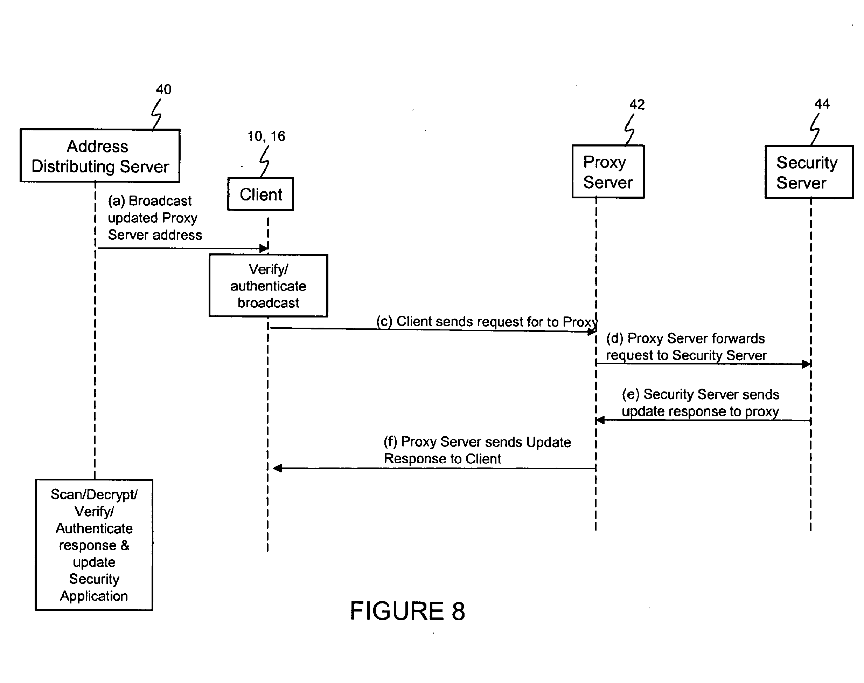

Figure 6 shows the corresponding message flow between the various security system components (a proxy server 42 and the security information update server 44). As shown in Figure 6, a client terminal 10, 16 broadcasts a request for an address to contact to update its security application 32. A proxy server 42 which is in the broadcast domain of the communications network local to the client terminal 10, 16 receives the request message, verifies/authenticates it, and responds with a message which includes the address of security update server 44. The client terminal 10, 16 receiving the response, processes the response to verify its origins and authenticate the information to update its security application with the address of the responding proxy server 42. The client terminal then generates a request for a security update which is addressed to the proxy server 42 which forwards it to the security update server 44.
Security update server 44 then processes the request and responds to the client via the proxy server 42. In this way, the update mechanism does not need an additional server platform simply to distribute the additional proxy server addresses to the client terminals 10, 16 in the network. Figures 7 and 8 show embodiments in which an address distributing server broadcasts updated addresses to clients.

In Figure 7, address distributing server 40 broadcasts the address "#A" for a server A. Server A may comprise the security software update server 44 itself (which is the embodiment shown in Figure 7) or comprise a proxy server 42 (in which case the proxy server will forward communications received from a client terminal 10, 16 to a security software update server 44) which is the embodiment shown by the message flow in Figure 8. In both embodiments, each broadcast address is valid only for a given period of time. For example, in Figure 8, server address #A for server A is valid for a first given period of time T1, after which a new address #B, for server B, is broadcast by address distributing server 40 which is valid for a second period of time T2, and so on.

Within time period T1 for which its address is distributed by address distributing server 40, the server A is operational and client terminals "X" and "Y" will be able to address their requests for update information to server A. After time period T1 has expired, however, a new server address #B is broadcast which is a valid address for a period of time T2. The address #B for server B is advertised by the address distributing server 40 sending out a new update broadcast. The broadcast may be repeated more than once within each time period or just at the start of each time period. There may be an short overlap in time during which more than one server address is valid to ensure continuity of the update service for client terminals.

In Figure 7, client terminals X, Y are shown requesting updates for their respective security software applications 32 from server B by sending information to the server address #B within time period T2. When a request is received by a validly contactable update server, the server processes the request and responds to the client terminal which sent the request with update information for that requesting client terminal's security application 32 which is encapsulated in a suitable communications format for that client terminal. The security application 32 is then able to recognise the additional security information update communication using a suitable technique, for example, by scanning the incoming communication as mentioned herein above and/or recognising the communication as containing update information by matching the sender's address to the address to which the update request was sent to by the client terminal.

In the embodiment shown in Figure 8, servers A and B shown in Figure 7 comprise proxy servers 42a,42b and it is the proxy server address which is broadcast by the address distributing server 40. The security application running on a client terminal 10, 16 which then receives this broadcast message can determine it relates to a new address for its update requests 9and the client terminal may also perform suitable verification/authentication on the incoming address information). When a client terminal subsequently sends out a request to a proxy server 42 at the latest server address it has received, which may be responsive to a triggering event and/or at a predetermined time (which may be determined to be non-periodic by varying the time intervals between requests for updates) the proxy server 42 will process the received request, possibly authenticating and/or verifying the client terminal source, and then forwarding the request (or information extracted from the request, or an encapsulation of the request) to security update server 44. The security update server 44 then processes the request, and responds with relevant information (assuming an update is available) to the proxy server 42. Proxy server 42 then forwards the request to the client terminal 10, 16 where the response is suitably processed (for example, to decrypt it/verify its source, authenticate the message contents/extract the additional information provided etc (not necessarily in that order) so that the additional information can be used to update the security application 32, for example, with additional security related or non-security information (e.g. bug fixes, additional search/scanning or other capabilities etc).

Those of ordinary skill in the art will appreciate that there are potentially many variants on the embodiments, including the overall system architecture, described hereinabove. For example, one or more security servers could be active for certain periods of time, including set times of day and/or for one or more days at a time, and each server could broadcast its own address and/or response to broadcasts from the client terminals for operational server addresses. Thus the security update servers 44 can provide security update information to directly by broadcasting or otherwise circulating their addresses to client terminals 10, 16 (or indirectly if the address distributing server 42 performs a broadcast). In some embodiments, a client terminal generates an security application update request responsive to receiving an address update, however, in other embodiments requests for updates for the security application are sent instead if a triggering event occurs and/or at a range of predetermined points in time and/or at random points in time (which may provide more protection against an update request being recognised by software contaminants located on a client terminal 16).

In one embodiment, each security update address is unique per request, and generating a request for new security information also triggers a request by the client for a new server address (either before or after the security application update request is generated). Each server address update includes information on the name, IP address, and connection port to which the client terminal 10, 16 is to address security application update requests.

In one embodiment, a device is located within an ISP or organisation which provides an intermediary location from which updates to a variety of solutions can be sourced. In one embodiment, each server 42 functions as a trusted proxy to a vendor's update site(s) by routing traffic to that site. A server 42 accepts trusted connections from all devices within a network with which it is associated (e.g.: a client terminal 10, 16) and is not identifiable by name or purpose until such time as it receives an appropriate request. The proxy server is advertised within a network to connected client terminals 10, 16 , using either a proprietary or open method. For example, , a local DNS TXT name, broadcast or proprietary handshake to initiation the connection from the update mechanism on a client terminal 10, 16.
In one embodiment, a client terminal comprises a computer device which requests an update from a security service provider ("SSP").

The update mechanism of the security application 32 running on the computer sends a request out, is responded to (by whatever means) with the next available proxy address for example,: proxy34.xxinternet.com (or a randomly/pseudorandomly generated address) The security application 32 update program then connects to proxy34.xxinternet.com, and delivers an encrypted or digitally signed routing request saying "route this session to updates.SSP.com" . In one embodiment, a signature is provided which allows enables the signing key for any update communications messages to be changed in the event one of the routing nodes is compromised and the signing key is extracted. The proxy server 42 then initiates a connection to SSP's servers and proxies the traffic, for example, in one embodiment, proxy server 42 functions as a SQUID proxy server. The client terminal then downloads the relevant security application update data (which may be provided as one or more messages and/or file transfers or even streamed depending on the characteristics of the update programs / data and these are then applied (assuming no local code execution barriers).

Even when a client terminal 16 has already been infected with a software contaminant (e.g. Malware) which is blocking access to a known update server, the software contaminant will be ineffective as soon as the update server address changes to an address unknown to the software contaminant. The identity of the proxy server 42 is random, and cannot be coded against as a constant to be blocked. This means that even if local routing blocks are put in place by the software contaminant (Malware), the security application update will bypass the blocks. If the software contaminant (Malware) blocked significantly more than just access to the update servers, this would make its presence on client terminal 16 more likely to be detected by a user and/or another machine, which in turn reduces its abilities to propagate or act as a Bot.

In one embodiment, a client terminal stores a preconfigured list of proxy address distributing servers, and modifies the address used each time a triggering event occurs and/or from time to time. An example of a triggering event is when a client terminal broadcasts a request for a new address for its update requests responsive to a said security application 32 located on the client terminal determining that a said remote security update server 44 is not accessible at an address which the security software was previously able to access.

The request may be broadcast after one or more intervals of time and/or broadcast responsive to the device and/or said security software determining that the device has said state in which a said previously accessible remote server address is no longer accessible.

In this way, at least one embodiment of the invention provides a system and method which enable malware or any other form of contaminant software which performs one or more operations on a communications-enabled device to be disabled and/or removed. The device has a first state in which it has a security application which is capable of establishing a connection to an addressable remote server. The one or more operations performed by said contaminant software cause said device to have a second state in which the addressable remote server accessible by the security application of said device in said first state at said given address is not accessible at said address by the device in the second state. The software contaminant is disabled and/or removed from the device (a client terminal) by providing the device with an address for a proxy server, the address of the proxy server being addressable by the security application running on the device in its second state. This enables the establishment of a communications channel between said device and said addressable remote server via said proxy server, said channel providing said application with data, and the security application then uses the additional data to enable the device to disable at least one of said operations performed by said software.

The term client terminal as used herein refers to any appropriate communications enabled device which comprises an operating system which is capable of supporting a security application, for example, a mobile telephone type device, personal digital assistant, personal computer, portable computer, television set-top box, games console, domestic appliance, control system, etc., etc.,

One aspect of the invention comprises an address update distributing server arranged for use in a system as described herein and in the accompanying claims.

Another aspect of the invention comprises an additional security application data providing server 44 arranged for use in a system as described herein and in the accompanying claims.

Another aspect of the invention comprises a proxy server 42 arranged for use in a system as described herein and as claimed in the accompanying claims.

## Claims

1. A method of updating security information utilised by a security application running on a client terminal, the method comprising:
the security application scanning an incoming communication;
determining the incoming communication comprises a different server address to the server address to which the security application is currently configured to send requests for additional security information, said different server address comprising an address which is different to the source address of said incoming communication; and
reconfiguring the security application to address requests for additional information to said different server address.

2. A method as claimed in claim 1, wherein the incoming communication is determined as comprising a different server address by the security application recognising a code identifying it as providing new update server address information which is recognisable by said security application when it performs said security scan.

3. A client terminal upon which a security software application is operational, the security software application being arranged to receive security information updates from a dynamically assigned server address.

4. A client terminal as claimed in claim 3, wherein said address is dynamically assigned after said client terminal additionally comprises a software contaminant arranged to disrupt communications associated with updating said security software.

5. A system for updating the address of a remote data-providing server which is stored on a client device, the server address being one to which the client device is configured to request data from which is required by the device in order'to remove one or more software contaminants located on the device, wherein one or more of the contaminants is arranged to disrupt communications between the device and an address for said remote server which is known to said contaminant, the system comprising:
at least one said remote data-providing server, the data-providing server being arranged to provide a plurality of said devices with data which enables each said device to remove one or more of said software contaminants; and
an address-update server arranged to provide an updated address of one or more servers to said plurality of devices, whereby each said device is able to request data from said at least one data-providing server by generating a request for data addressed to an updated server address for the data-providing server, said proxy server address being located at said updated address,
wherein each one of said at least one remote data-providing servers is configured to respond to a device which has generate a request for data by providing said data which, when received and processed by the device enables the device to at least disable a said software contaminant.

6. A system as claimed in claim 5, wherein the updated address of one or more servers comprises the updated address of said data-providing server.

7. A system as claimed in claim 5 or 6, further including at least one proxy server, and wherein the updated address of one or more servers comprises an updated address for one or more proxy servers, each proxy server being configured to receive a request for data from a device which is forwarded to said at least one remote data-providing servers, and wherein a said at least one remote data-providing server is configured to respond to a request for data forwarded from a proxy server by responding to said proxy server.

8. A system as claimed in claim 5 or 6, further including at least one proxy server, and wherein the updated address of one or more servers comprises an updated address for one or more proxy servers, each proxy server being configured to receive a request for data from a device which is forwarded to said at least one remote data-providing servers, and wherein a said at least one remote data-providing server is configured to respond to a request for data forwarded from a proxy server by responding directly to said client.

9. A system as claimed in claim 5, wherein said address-providing server is arranged to broadcast a communication containing a said updated address to a plurality of devices.

10. A system as claimed in claim 5, wherein a said device is arranged to broadcast a communication requesting a said updated address to a plurality of servers.

11. A system as claimed in any previous ones of claims 5 to 10, wherein a device is infected by one or more of said software contaminants at the time of receiving said data enabling at least disablement of said one or more of said software contaminants.

12. A system as claimed in any previous ones of claims 5 to 10, wherein a device is infected by one or more of said software contaminants at the time of receiving said updated address data.

13. A system as claimed in any of claims 5 to 12, wherein a device is infected by one or more of said software contaminants at the time of requesting said updated address data.

14. A method of disabling one or more operations performed by contaminant software running on a communications-enabled device, the device having a first state in which it is capable of establishing a connection to an addressable remote server, said one or more operations performed by said contaminant software causing said device to have a second state in which an addressable remote server accessible by a security application of said device in said first state at an address is not accessible at said address by the device in the second state, the method comprising:
providing the device with an address for a proxy server, wherein the address of the proxy server is addressable by the security application running on the device in its second state;
establishing a communications channel between said device and said addressable remote server via said proxy server, said channel providing said security application with data;
said security application using said data to enable the device to disable at least one of said operations performed by said contaminant software.
